# EUROPEAN PATENT SPECIFICATION

(11) **EP 3 714 304 B1**
(45) Date of publication and mention of the grant of the patent: **10.04.2024**
(21) Application number: 18804332.7
(22) Date of filing: 22.11.2018
(51) Int. Cl.: G02B 7/08, G02B 3/14, G02B 27/64

(54) **OPTICAL DEVICE, PARTICULARLY CAMERA, COMPRISING AUTOFOCUS AND OPTICAL IMAGE STABILIZATION**
OPTISCHE VORRICHTUNG, INSBESONDERE KAMERA, MIT AUTOFOKUS UND OPTISCHER BILDSTABILISIERUNG
DISPOSITIF OPTIQUE, EN PARTICULIER CAMÉRA, RÉALISANT UNE MISE AU POINT AUTOMATIQUE ET UNE STABILISATION D'IMAGE OPTIQUE

(30) Priority: 22.11.2017 EP 17203090
(43) Date of publication of application: 30.09.2020
(73) Proprietor: Nextlens Switzerland AG, 8953 Dietikon (CH)
(72) Inventor: ASCHWANDEN, Manuel, 6319 Allenwinden (CH); SMOLKA, Stephan, 8006 Zürich (CH)
(74) Representative: Schulz Junghans Patentanwälte PartGmbB
(86) International application number: PCT/EP2018/082267
(87) International publication number: WO 2019/101885

(56) References cited:
- WO-A2-2017/149092
- US-A1- 2016 054 578
- US-A1- 2017 176 710

## Description

The present invention relates to an optical device, particularly a camera.

Such an optical device comprises a lens having an adjustable focal length, and four actuators for adjusting the focal length of said lens and for stabilizing an image generated by the optical device with help of said lens.

Particularly, WO2017/149092A2 discloses an optical device comprising a lens shaping part that is in contact with a membrane of the device for defining a curvature adjustable area of the membrane, which area faces said optical element. The device further comprises a circumferential lens barrel that surrounds an opening in which at least one rigid lens is arranged that is held by the lens barrel, and an actuator means that is designed to move the optical element in an axial direction with respect to the lens shaping part.

Furthermore, US 2017/176710 A1 discloses a voice coil motor, including a magnet holder, a magnet set, a lens holder, a lens set, an upper and lower elastic piece and a circuit board. The magnet set has four magnets mounted on four sides of the magnet holder, each of the magnets having opposing N/S and S/N magnetic poles. The lens set is disposed in the lens holder.

Further, US 2016/054578 A1 discloses a lens actuator that includes a movable unit including a carrier defining an optical axis, a plurality of focusing coils surrounding the carrier and spaced with each other, each wound around an axis perpendicular to the optical axis, fixed on an outer surface of the carrier, a plurality of magnets each opposite to one of the focusing coils in a direction perpendicular to the optical axis direction, and a holder fixing the magnets; a plurality of shake correction coils each disposed below one of the magnets and opposite to the magnet in the optical axis direction; a base fixing the shake correction coils; and wires connecting the movable unit to the base.

Regarding the function of adjusting the focal length of the lens (e.g. autofocus also denoted AF) as well as stabilizing an image generated by the optical device (e.g. by means of optical image stabilization also denoted OIS), it is desirable to be able to actuate said functions with a minimal number of controllers while particularly using an optimal number of individual actuators to design a compact system.

This objective is solved by an optical device having the features of claim 1.

Preferred embodiments of the optical device are stated in the corresponding sub claims and are described below.

According to claim 1, the optical device comprises a lens having an adjustable focal length, and four actuators for adjusting the focal length of said lens and for stabilizing an image generated by the optical device with help of said lens, wherein the lens of the optical device comprises a container that is filled with a transparent fluid, wherein the container comprises a first wall formed by an elastically deformable membrane and an opposing second transparent wall, wherein the fluid is arranged between the two walls, and wherein the optical device comprises a lens shaping member configured to interact with the membrane for stabilizing said image, wherein each actuator comprises an electrically conducting first coil for adjusting said focal length and a second electrically conducting coil for stabilizing said image, wherein the respective actuator comprises a magnet that is configured to interact with the first and the second coil of the respective actuator, wherein the first coils are connected in series, wherein the optical device is configured to apply a first current to the first coils for adjusting said focal length, and wherein for stabilizing said image, the optical device is configured to apply a second current to a first pair of (e.g. opposing) second coils and a third current to a second pair of (e.g. opposing) second coils, and wherein the optical device is configured to tilt the lens shaping member relative to the container about a first axis using said first pair of actuators when said second current is applied to the corresponding first pair of second coils in order to tilt said area of the membrane relative to the second wall of the container so as to shift said image in a first direction for stabilizing said image.

For applying said three currents, the optical device may comprise a current driver comprising three channels, wherein each of said currents is applied via one of said channels, see also below.

Particularly, the invention uses multiple wires in a coil interacting with a specific magnetic field, here generated e.g. by magnets of the respective actuator.

Particularly, the optical device is configured to adjust the focal length automatically to generate a sharp image (AF). Said stabilizing of the image is particularly achieved by means of OIS, wherein a gyro sensor of the optical device provides an output signal indicative of the movement of the optical device in the extension plane of an image sensor of the optical device for generating said image, which extension plane is spanned e.g. by a first direction (e.g. x-direction) and an orthogonal second direction (e.g. y-direction), wherein the optical device is configured to shift the image in the first and/or in the second direction so as to compensate an unwanted movement of the optical device in said plane detected by the gyro sensor. Particularly, the image is shifted such that it does not change its position relative to the image sensor due to said unwanted movement of the optical device.

Furthermore, particularly, the first and the second coil of the respective actuator can be arranged further outward in a lateral direction than the lens (e.g. adjacent to a lateral wall of a housing of the optical device or adjacent to or in a corner region of a housing of the optical device, which corner region is formed by two adjacent lateral walls of the housing of the optical device). Particularly, the lateral direction extends perpendicular to the optical axis of the lens. Alternatively or in addition, the first and the second coil of the respective actuator can be arranged offset to the lens along the optical axis of the lens.

Further, particularly, the respective actuator can comprise a magnet consisting of one or multiple magnet sections with their own magnetization direction.

Further, according to an embodiment of the present invention, the four first coils form a continuous conductor configured to simultaneously interact with all of said magnets of said actuators for adjusting the focal length of the lens.

Further, particularly, the first pair of second coils can form a continuous conductor configured to simultaneously interact with two opposing magnets of said four magnets for stabilizing said image, wherein each of said opposing magnets is associated to one of the second coils of the first pair of second coils.

Further, particularly, the second pair of second coils can form a continuous conductor configured to simultaneously interact with the two remaining opposing magnets of said four magnets for stabilizing said image, wherein each of said opposing magnets is associated to one of the second coils of the second pair of second coils.

Further, particularly, the second transparent wall can be an optical element such as a rigid lens or a transparent plate, wherein the lens shaping member is configured to interact with the membrane for adjusting the focal length of the lens and/or for stabilizing said image.

Due to the fact, that the membrane can be elastically deformed, said container and the fluid residing therein form a focus adjustable (or tunable) lens.

Furthermore, particularly, the lens shaping member defines an area of the membrane that has an adjustable curvature. This curvature can be adjusted by an interaction of the lens shaping member with the membrane, e.g. by pushing the lens shaping member against the membrane or by pulling on the membrane by means of the lens shaping member.

Particularly, the lens shaping member can contact the membrane directly or indirectly via another material layer (e.g. formed by a glue etc.). The lens shaping member can further be attached to the membrane by bonding it directly to the membrane or via another material layer such as a glue layer.

Particularly, , the lens shaping part can be plasma bonded to the membrane.

Particularly, the notion according to which the lens shaping member defines an area of the membrane that has an adjustable curvature may mean that the lens shaping part delimits, by being attached to the membrane or by contacting the latter, an elastically expandable (e.g. circular) area of the membrane, wherein particularly said area extends up to an (e.g. circumferential) inner edge of the lens shaping member. This area may also be denoted as optically active area since the light passes through this area of the lens and is affected by the curvature of this area.

When the lens shaping member presses against the membrane, the membrane is expanded and said curvature of said area of the membrane to increases due to the fluid residing in the container. Likewise, when the lens shaping member pushes less against the membrane or even pulls the membrane, said curvature of said area of the membrane decreases.

Increasing curvature thereby means that said area of the membrane may develop a more pronounced convex bulge, or that said area of the membrane changes from a concave or a flat state to a convex one. Likewise, a decreasing curvature means that said area of the membrane changes from a pronounced convex state to a less pronounced convex state or even to a flat or concave state, or changes from a flat or concave state to an even more pronounced concave state.

The membrane can be made of at least one of the following materials: a glass, a polymer, an elastomer, a plastic or any other transparent and stretchable or flexible material. For example, the membrane may be made out of a silicone-based polymer such as poly(dimethylsiloxane) also known as PDMS or a polyester material such as PET or a biaxially-oriented polyethylene terephtalate (e.g. "Mylar").

Further, the membrane can comprise a coating. Further, the membrane can also be structured, e.g. comprises a structured surface e.g. a nanostructure for antireflection coating or have a variable thickness or stiffness across the membrane.

Further, said fluid preferably is or comprises a liquid, a liquid metal, a gel, a gas, or any transparent, absorbing or reflecting material which can be deformed. For example, the fluid may be a silicone oil. Additionally, the fluid may include polymers.

Further, according to an embodiment of the present invention, each magnet is connected to the lens shaping member which is moveable with respect to the container, and wherein the first and the second coils are rigidly coupled to the container (e.g. via a lens barrel).

Further, according to an alternative embodiment of the present invention, each magnet is rigidly coupled to the container (e.g. via a lens barrel), wherein the first and the second coils are connected to the lens shaping member which is moveable with respect to the container.

Further, particularly, the actuators can be configured to move the lens shaping member relative to the container or the container relative to the lens shaping member when the first current is applied to the first coils of the actuators in order to exert a force on the membrane with the lens shaping member in a direction running parallel to the optical axis for adjusting said focal length (this relative movement can be achieved by either moving the lens shaping member or by moving the container of the lens).

Further, particularly, the lens shaping member defines an area of the membrane having an adjustable curvature, wherein the actuators can be configured to push the lens shaping member against the membrane in a direction extending parallel to the optical axis of the lens or to pull on the membrane (e.g. by pulling the lens shaping member bonded to the membrane) in an opposite direction running parallel to the optical axis of the lens when the first current is applied to the first coils of the actuators for adjusting a curvature of said area and therewith the focal length of the lens.

Further, particularly, the first coils can be connected in series such that the first current flows through all first coils in the same direction or such that the forces (e.g. acting on the lens shaping member for adjusting the focal length of the lens) generated by the first coil and the magnet of each actuator point in the same direction (i.e. the lens shaping member is not tilted, but moved in the direction of the optical axis).

Further, according to an embodiment of the present invention, the four actuators are comprised of a first pair of two opposing actuators and a second pair of two opposing actuators, wherein the second coils of the first pair of actuators form said first pair of second coils, and wherein the second coils of the second pair of actuators form said second pair of second coils.

Further, according to an embodiment of the present invention, for preventing a shift in the focal length of the lens upon tilting of the lens shaping member about said first axis, the optical device is configured to tilt the lens shaping member relative to the container about a first axis using said first pair of actuators when said second current is applied to the corresponding first pair of second coils in order to tilt said area of the membrane relative to the second wall of the container so as to shift said image in a first direction (e.g. x-direction) for stabilizing said image. Further, according to an embodiment, the optical device is configured to tilt the lens shaping member relative to the container about a second axis using said second pair of actuators when said third current is applied to the corresponding second pair of second coils in order to tilt said area of the membrane relative to the second wall of the container so as to shift said image in a second direction (e.g. y-direction) for stabilizing said image, wherein particularly the second direction runs perpendicular to the first direction. Particularly, the first and second direction span the extension plane of an image sensor of the optical device, see also above.

Further, according to an embodiment of the present invention, the second coils of said first pair of second coils are connected in series such that the second current flows through one of said second coils of the first pair of second coils in a first current direction and through the other second coil of said first pair of second coils in a current direction that is opposite the first current direction (e.g. when looking in the direction of the coil axes clockwise and counter-clockwise or vice versa) or such that the first pair of actuators generates two forces (e.g. acting on the lens shaping member) that point in opposite directions (e.g. for tilting the lens shaping member).

Further, in an embodiment, the second coils of said second pair of second coils are connected in series such that the third current flows through one of said second coils of the second pair of second coils in a second current direction and through the other second coil of said second pair of second coils in a current direction that is opposite the second current direction (e.g. when looking in the direction of the coil axes clockwise and counter-clockwise or vice versa) or such that the second pair of actuators generates two forces (e.g. acting on the lens shaping member) that point in opposite directions (e.g. for tilting the lens shaping member).

Further, according to an embodiment of the present invention, the optical device is configured to tilt the lens shaping member relative to the container about a first axis or to tilt the container relative to the lens shaping member about a first axis using (in each case) said first pair of actuators when said second current is applied to the corresponding first pair of second coils such that an amount of force added on one side of the lens shaping member by means of a second coil of the first pair of actuators and the magnet interacting with this second coil is simultaneously removed on an opposing side of the lens shaping member by means of the other second coil of the first pair of actuators and the magnet interacting with this other second coil, so as to prevent a shift in the focal length of the lens upon said tilting of the lens shaping member about said first axis.

Further, according to an embodiment, the optical device is configured to tilt the lens shaping member relative to the container about a second axis (or to tilt the container relative to the lens shaping member about a second axis) using (in each case) said second pair of actuators when said third current is applied to the corresponding second pair of second coils such that an amount of force added on one side of the lens shaping member by means of a second coil of the second pair of actuators and the magnet interacting with this second coil is simultaneously removed on an opposing side of the lens shaping member by means of the other second coil of the second pair of actuators and the magnet interacting with this other second coil, so as to prevent a shift in the focal length of the lens upon said tilting of the lens shaping member about said second axis.

Further, according to an embodiment of the present invention, the first and the second coil of the respective actuator comprise a plurality of windings.

Further, according to an embodiment of the present invention, the windings of the second coil of the respective actuator are wound onto the windings of the first coil of the respective actuator. Alternatively, the windings of the first coil of the respective actuator can also be wound onto the windings of the second coil of the respective actuator.

Further, according to an embodiment of the present invention, each winding of the first coil of the respective actuator extends adjacent a winding of the second coil of the respective actuator.

Further, according to an embodiment of the present invention, windings of the first coil of the respective actuator are stacked on top of one another perpendicular to a common coil axis of the first coil and the second coil of the respective actuator while windings of the second coil are stacked on top of one another perpendicular to said common coil axis.

Further, particularly, the first coil of the respective actuator can comprise more windings than the second coil of the respective actuator. This allows to account for the fact that adjusting the focal length with the four actuators needs a larger force than conducting image stabilization with the first and second pair of actuators. This is due to the fact that adjusting the focal length may require pushing the lens shaping member against the membrane in order to increase the curvature of said curvature-adjustable region of the membrane while image stabilization requires to tilt the lens shaping member while maintaining a constant pressure of the fluid in order not to change the focal length. Using less windings for the second coils allows in principle to use the same (e.g. wire) cross section for the windings of the first and the second coils.

Further, particularly, the windings of the first coil of the respective actuator can comprise a larger (e.g. wire) cross section than the windings of the second coil of the respective actuator. Also here, the first coils can generate a larger force compared to the second coils. In principle, using a smaller cross section for the windings of the second coils allows to use the same number of windings for the first and the second coils.

Further, particularly, for applying the first, the second and the third current, the optical device can comprise a current driver comprising a first, a second and a third channel, wherein the optical device is configured to apply the first current to the first coils via the first channel, to apply the second current to the first pair of second coils via the second channel, and to apply the third current to the second pair of second coils via the third channel.

Further, particularly, the first channel can comprise a higher resolution (12 bits or more) than the two other channels e.g. 10 bits).

Further, according to an embodiment of the present invention, the respective magnet faces the first and the second coil of its actuator in a direction of a common coil axis of the first and the second coil, wherein the windings of the first and the second coil are wound around said common coil axis.

Further, according to an embodiment of the present invention, the respective magnet comprises a magnetic flux return structure arranged on a side of the magnet that faces away from the first and the second coil.

Further, according to an embodiment of the present invention, the respective magnet comprises a first section comprising a first magnetization and an adjacent second section comprising a second magnetization, wherein the first and the second magnetization are antiparallel.

Further, according to an embodiment of the present invention, the respective magnet protrudes into an orifice surrounded by the first and the second coil of its actuator. In an embodiment the respective magnet can protrude into the respective orifice in a direction of a common coil axis of the first and the second coil, wherein the windings of the first and the second coil are wound around or extend around said common coil axis.

Further, particularly, a first magnetic flux return structure can be connected to a front side of the magnet that is arranged in said orifice and/or a second magnetic flux return structure that is arranged on a back side of the magnet, which back side faces away from said front side.

Further, particularly, the optical device can comprise an image sensor and a lens barrel comprising at least one rigid lens, wherein the lens barrel is rigidly coupled to the image sensor, and wherein the container of the lens is arranged on (or adjacent to) a top side of the lens barrel so that the container, particularly said area of the membrane, faces the at least one rigid lens and the image sensor of the optical device, wherein said top side of the lens barrel faces away from said image sensor. Further, particularly, the respective actuator can comprise a pusher that is configured to be moved by means of the magnet and the first and the second coil of the respective actuator.

Further, particularly, the respective pusher can extend along the optical axis of the lens (e.g. outside the lens barrel) and can comprises a first end section and an opposing a second end section.

Further, particularly, the second end section of the respective pusher can be connected to a spring structure that is rigidly coupled to the lens barrel which allows the respective pusher to be moved by the associated actuator independently with respect to the other pushers.

Further, particularly, each magnet can be connected to a second end section of a pusher, wherein particularly the first and the second coils can be rigidly coupled to the lens barrel (or to the container).

Further, particularly, the first and the second coil of each actuator can be connected to an associated second end section of a pusher, and wherein each magnet can be rigidly coupled to the lens barrel.

Further, particularly, the first end section of the respective pusher can be connected to the lens shaping member, particularly to an arm protruding from a circumferential region of the lens shaping member. Particularly, said circumferential (or annular) region can define said area of the membrane having the adjustable curvature.

Further, particularly, the respective pusher can be configured to be moved along the optical axis of the lens, wherein particularly an interaction of the respective pusher with the membrane of the lens and the spring structure provides a guiding of the respective pusher.

Further, particularly, the first end section of the respective pusher can be connected to the lens shaping member (particularly to the respective arm of the lens shaping member, see above) via a flexible connection element so that the lens shaping member can be tilted with respect to the respective pusher (e.g. up to an amount of 5° as an example).

Further, particularly, windings of the first and the second coils of the actuators can be embedded in a substrate of the optical device, wherein the substrate can be a printed circuit board.

Further, particularly, the respective actuator also comprises a bobbin for holding windings, wherein the windings of the first and the second coil of the respective actuator can be wound on the bobbin.

Further, particularly, the respective actuator of the optical device can comprise a hall sensor for measuring the position of the lens shaping member.

Further, particularly, the respective pusher can be one of: an overmolding of the spring structure, glued to the spring structure, or connected to the spring structure by means of heat staking.

Further, particularly, the optical device can be configured to generate a feedback signal using an image sensor or a distance sensor comprised by or located next to the optical device for adjusting the focal length to a desired value, wherein the optical device can be configured to apply a first current to the first coils such that the feedback signal approaches a reference value corresponding to the desired focal length of the lens. Alternatively, or in addition, the optical device can be configured for manual adjustment of the first current for adjusting the focal length of the lens to a desired value.

Further, particularly, the optical device can be configured to generate a feedback signal using a gyro sensor comprised by or located next to the optical device for stabilizing said image (for counteracting an unwanted movement of the optical device), wherein the optical device can be configured to apply a second current to the first pair of second coils and/or a third current to the second pair of second coils such that the feedback signal approaches a reference value corresponding to a desired shift of the image (in the first and/or second direction) for stabilizing said image generated by the optical device.

Further, particularly, the optical device can be configured to undo a tilt of the lens shaping member caused by the first coils of the actuator, by applying a correcting second current to the first pair of second coils and/or a correcting third current to the second pair of second coils.

Further, particularly, the optical device can be configured to correct a change in the focal length of the lens generated by the first pair of second coils and/or by the second pair of second coils by applying a corresponding correcting first current to the first coils in order to maintain a constant focal length of the lens.

According to a further aspect of the present invention, a method for assembling an optical device according to the present invention is disclosed, comprising the steps of:
- connecting an image sensor of the optical device to a base of the optical device,
- mounting a lens barrel comprising at least one rigid lens to the base so that the lens barrel faces the image sensor (particularly, the base can comprise a recess with an internal thread, wherein the lens barrel can comprise an external thread that is configured to engage with said internal thread for mounting the lens barrel to the base)
- providing four first and four second coils and mounting the first and the second coils to the base, wherein particularly said first and second coils are comprised by a substrate (e.g. a printed circuit board) that is mounted to the base, and wherein particularly the substrate comprises recesses, wherein each recess is surrounded by a first and a second coil and configured for receiving a magnet for interacting with the respective first and second coil,

- providing four pushers (e.g. for each of the four actuators) connected to a spring structure, wherein the respective pusher comprises a first and a second end section,
- providing four magnets and connecting each magnet to a second end section of a pusher,
- connecting a lens comprising a container and a lens shaping member to the pushers, wherein the container comprises a first wall in form of a transparent an elastically deformable membrane and a transparent second wall facing the first wall, wherein the container is filled with a transparent fluid that is arranged between the two walls, and wherein the lens shaping member is bonded to the membrane and comprises arms protruding from a circumferential region of the lens shaping member, wherein said arms are connected to the pushers in order to connect the lens to the pushers,
- connecting a spacer to a top side of the lens barrel,
- connecting the spring structure to the base, wherein the container is arranged on the spacer such that each arm of the lens shaping member protrudes through a recess of the spacer and the magnets are arranged in the recesses of the substrate while the pushers extend along the optical axis of the lens on an outside of the lens barrel, and
- connecting a housing (forming e.g. a shield against electro-magnetic fields) to the base.

Furthermore, a device is disclosed, particularly a mobile phone, comprising an optical device according to the present invention. This system can further comprise a distance sensor and/or a gyro sensor.

Particularly, the present invention described herein can be applied to the following fields / devices: Ophthalmology equipment such as phoropter, refractometer, pachymeter, iometrics, perimeter, refrakto-keratometer, refra. Lensanalyzer, tonometer, anomaloskop, kontrastometer, endothelmicroscope, anomaloscope, binoptometer, OCT, rodatest, ophthalmoscope, RTA, machine vision, mobile phone cameras, mobile phones, medical equipment, robot cams, virtual reality or augmented reality cameras, microscopes, telescopes, endoscopes, drone cameras, surveillance camera, web cams, automotive camera, motion tracking, binoculars, research, automotive, projectors, range finder bar code readers, web cams, 3D sensing.

Further features and advantages of the present inventions as well as embodiments of the present invention shall be described in the following with reference to the Figures, wherein
- Fig. 1: shows a schematic illustration of an arrangement of four actuators of an optical device according to the present invention, wherein particularly the optical axis of the optical device runs perpendicular to the shown plane;
- Fig. 2: shows the arrangement of Fig. 1, wherein a first current is merely applied to the first coils of the actuators for adjusting the focal length of a lens of the optical device;
- Fig. 3: shows the arrangement of Fig. 1, wherein a second current is applied to a first pair of second coils for tilting a lens shaping member about a first axis (e.g. for providing OIS);
- Fig. 4: shows the arrangement of Fig. 1, wherein a third current is applied to a second pair of second coils for tilting a lens shaping member about a second axis (e.g. for providing OIS);
- Fig. 5: shows the configuration of Fig. 3, wherein in addition a first current is applied to all first coils of the actuators in order to adjust the focal length of the lens in addition;
- Fig. 6: shows application of a first current to the first coil as well as of second current to the first pair of second coils and of a third current to the second pair of second coils so as to tilt the lens shaping member about both axes and to adjust the focal length of the lens at the same time;
- Fig. 7: shows different embodiments of a combined first and second coil of an individual actuator of an optical device according to the present invention;
- Fig. 8: shows an exploded view of an embodiment of an optical device according to the present invention particularly using the arrangements shown in Fig. 1 to 6;
- Fig. 9: shows a detail of the Fig. 8 (and of Fig. 10);
- Fig. 10: shows a cross sectional view of the optical device shown in Figs. 8 and 9;
- Fig. 11: shows steps (A) to (I) of a method for assembling an optical device according to an embodiment of the present invention;
- Figs. 12-15: show different possible configurations of an actuator according to the present invention;
- Fig. 16: shows use of a Hall sensor for measuring a position of a magnet of an actuator of the optical device according to the present invention;
- Fig. 17: shows a schematical illustration of possible movements of the lens shaping member generated by the actuators of the optical device, wherein the lens shaping member can be moved in the direction of the optical axis (adjustment of the focal length of the lens) and/or tilted about e.g. two different axes in order to provide image stabilization; and
- Fig. 18: shows a schematical illustration of a device (e.g. mobile phone) comprising an optical device and a distance sensor and/or a gyro sensor.

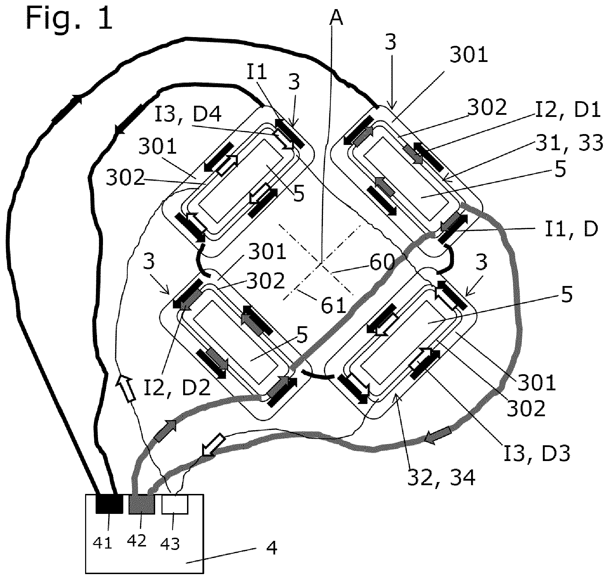

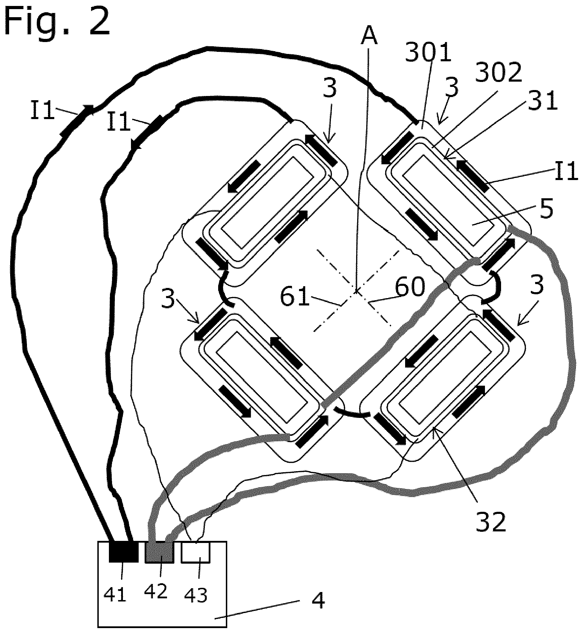

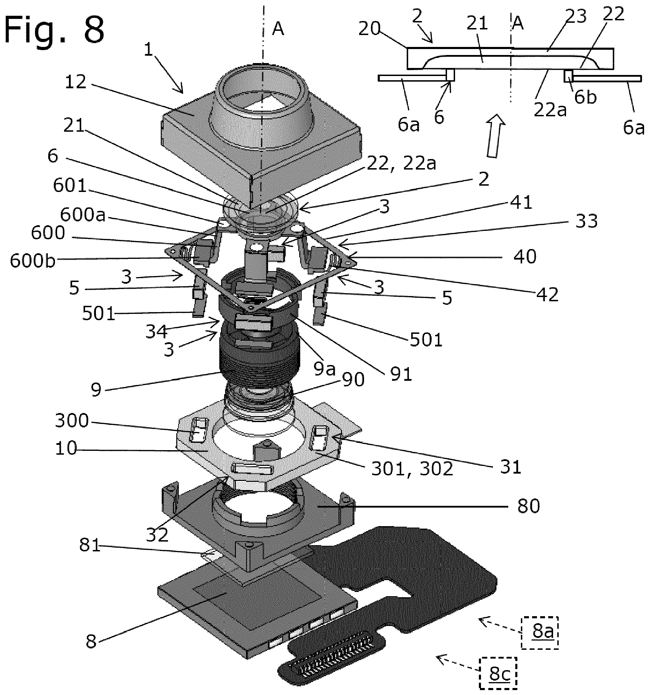

Fig. 1 shows in conjunction with Figs. 2 to 6 a schematical illustration of an optical device 1 according to the present invention, which comprises a lens 2 (cf. Figs. 8, 10, or 17) having an adjustable focal length, and four actuators 3 for adjusting the focal length of said lens 2 and for stabilizing an image generated by the optical device 1 with help of said lens 2. According to the present invention, each actuator 3 comprises an electrically conducting first coil 301 for adjusting said focal length and a second electrically conducting coil 302 for stabilizing said image, wherein the first coils 301 are connected in series as shown in Fig. 1, wherein the optical device 1 is configured to apply a first current I1 to the first coils 301 for adjusting said focal length, and wherein for stabilizing said image, the optical device 1 is configured to apply a second current I2 to a first pair 31 of (e.g. opposing) second coils 302 and a third current I3 to a second pair 32 of (e.g. opposing) second coils 302.

For applying said three currents I1, I2, I3, the optical device 1 may comprise a current driver 4 (cf. Figs. 1 to 6) comprising three channels 41, 42, 43. Particularly not more than three channels, wherein each of said current signals I1, I2, I3 is applied via one of said channels 41, 42, 43.

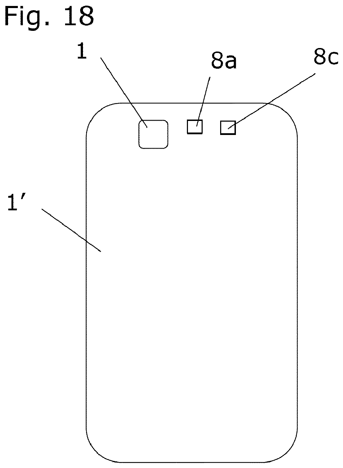

Particularly, the optical device 1 is configured to adjust the focal length automatically to generate a sharp image (using e.g. the image sensor or a distance sensor 8a), which is termed autofocus (AF). For achieving said stabilization of the image generated by the optical device 1 (e.g. by using an image sensor 8 as shown in e.g. Fig. 8) the optical device 1 may comprise and/or may be connected to a gyro sensor 8c that provides an output signal indicative of the movement of the optical device 1 in the extension plane of the image sensor 8 of the optical device 1 for generating said image, which extension plane is spanned e.g. by a first direction (e.g. x) and an orthogonal second direction (e.g. y), wherein the optical device 1 is configured to shift the image in the first and/or second direction so as to compensate an unwanted movement of the optical device 1 in said plane detected by the gyro sensor 8c. Particularly, the optical device 1 can form a component of a device 1' (e.g. in the form of a mobile phone) as shown in Fig. 18, which device 1' may also comprise said distance sensor 8a and/or said gyro sensor 9c. The optical device 1 is then configured to provide optical image stabilization for counteracting an unwanted movement of the device 1' as described herein.

As schematically indicated in Figs. 1 to 6, the respective actuator 3 comprises - besides a first and a second coil 301, 302 - a magnet 5 that is configured to interact with its associated first and second coil 301, 302.

As further shown in Figs. 1 to 6, the four first coils 301 form a continuous conductor configured to simultaneously interact with all of said magnets 5 of said actuators 3 for adjusting the focal length of the lens 2. This allows to move a lens shaping member 6 (cf. Figs. 8, 10 and 17) in the direction of the optical axis A for adjusting the focal length of the lens 2 as will be explained in more detail below.

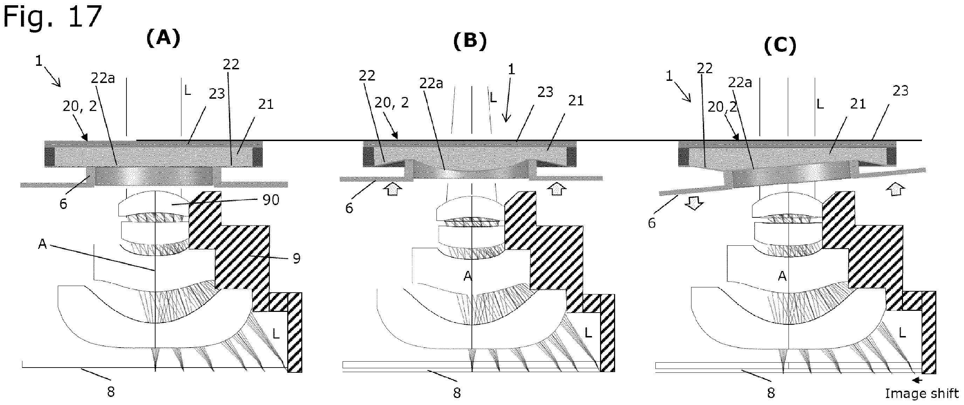

Further, the first pair 31 of second coils 301 forms a continuous conductor configured to simultaneously interact with two opposing magnets 5 for stabilizing said image. Using the first pair of actuators 33 comprising said first pair 31 of second coils 302 and the corresponding magnets 5, the lens shaping member 6 can be tilted about a first axis 60, which allows to deform the lens into a prism (as shown in Fig. 17(C)) so that light L passing the lens 2 can be deflected in order to counteract an unwanted movement of the optical device 1.

Likewise, also the second pair 32 of second coils 302 forms a continuous conductor configured to simultaneously interact with the two remaining opposing magnets 5 (of said four magnets 5) for stabilizing said image. Here, using the second pair of actuators 34 comprising said second pair 32 of second coils 302 and the corresponding magnets 5, the lens shaping member 6 can also be tilted about a second axis 61 in order to counteract an unwanted movement of the optical device 1. The two possible tilting movements about the first and the second axis 60, 61 can be combined so that a 2D shift of the generated image can be achieved for compensating a corresponding unwanted movement of the optical device 1.

Figs. 2 to 6 show different situations of focal length adjustment and image stabilization. In Fig. 2 merely a first current I1 is applied to all four first coils connected in series such that the current I1 flows in the same direction through all first coils or at least such that the force generated by the individual actuator 3 (e.g. magnet 5 and associated first and second coil 301, 302) points in the same direction, namely parallel to the optical axis A, so that the focal length of the lens 2 is adjusted (e.g. as shown in Fig. 17 (B)).

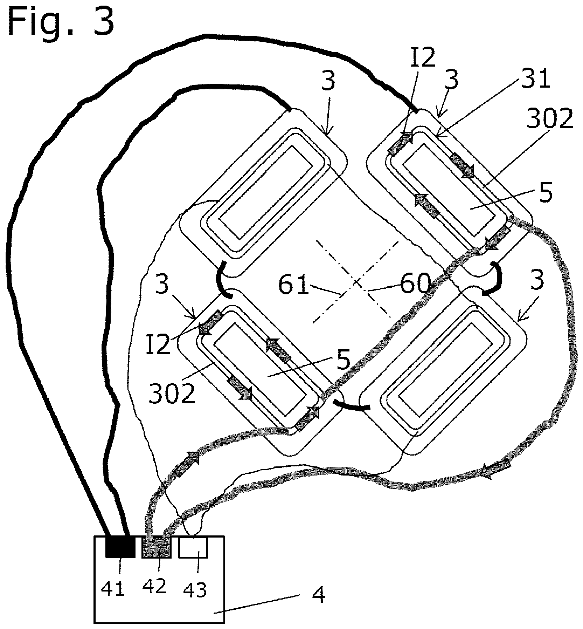

In Fig. 3 merely the second coils 302 of the first pair 31 of second coils 302 receive a second current I2 so that the lens shaping member 6 is tilted about the first axis 60.

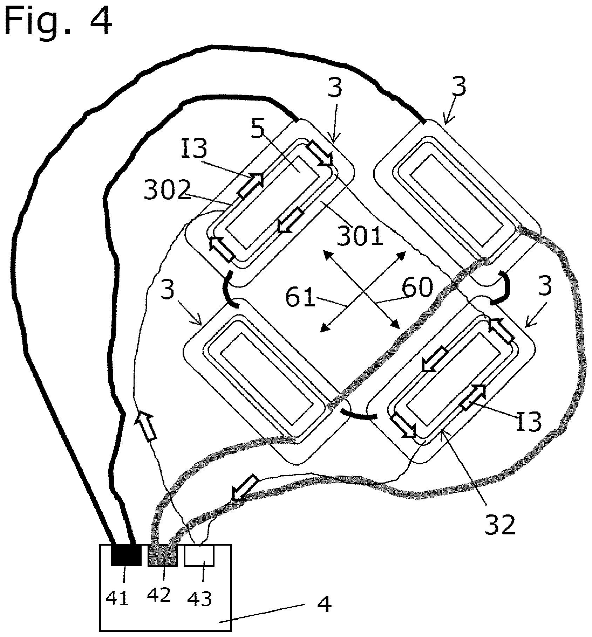

In contrast thereto, in Fig. 4 merely the second coils 302 of the second pair 32 of second coils 302 receive a third current I3 so that the lens shaping member 6 is tilted about the second axis 61.

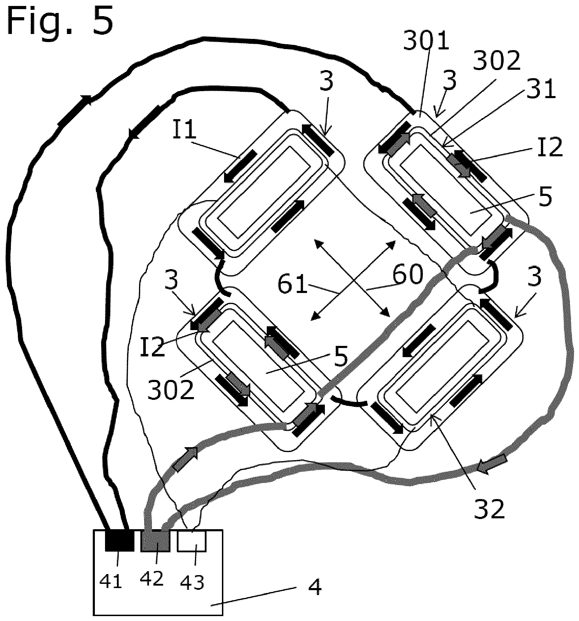

Fig. 5 shows a combination of an axial movement of the lens shaping member 6 due to applying a first current I1 to all first coils 301 of all actuators 3 and a tilting movement about the first axis 60 due to activation of the second coils 302 of the first pair 31 of second coils by means of a second current I2.

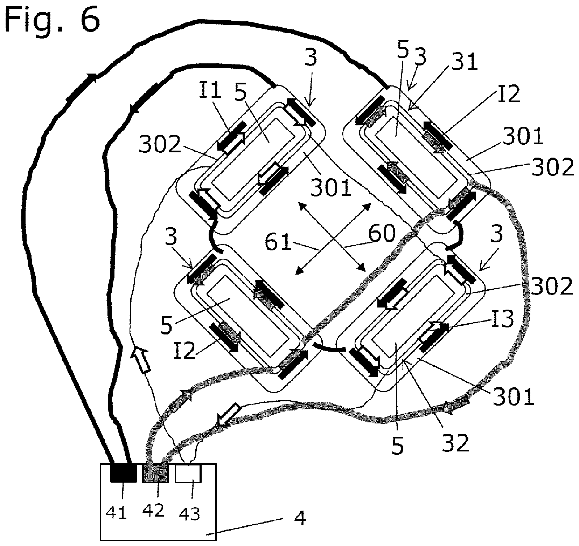

Finally, Fig. 6 shows a situation where the first, second and third current I1, I2, I3 is applied simultaneously, so as to achieve an adjustment of the focal length of the lens 2 (e.g. as shown in Fig. 17 (B)) and to provide image stabilization (e.g. Fig. 17 (C)) at the same time.

Particularly, according to an embodiment of the invention, as indicated in Figs. 8, 10 and 17, the lens 2 of the optical device 1 comprises a container 20 that is filled with a transparent fluid, particularly liquid, 21, wherein the container 20 comprises a first wall 22 formed by an elastically deformable membrane 22 and an opposing second transparent wall 23, which can be an optical element such as a rigid lens or a transparent (e.g. glass or plastic) plate, wherein the fluid 21 is arranged between the two walls 22, 23, and wherein said lens shaping member 6 is configured to interact with the membrane 22 for adjusting the focal length of the lens 2 and/or for stabilizing said image.

Particularly, for this, the lens shaping member 6 defines an area 22a of the membrane 22 having an adjustable curvature, wherein the actuators 3 are configured to push the lens shaping member 6 against the membrane 22 in a direction extending parallel to the optical axis A of the lens 2 (as shown e.g. in Fig. 17 (B)) or to even pull on the membrane 22 in an opposite direction running parallel to the optical axis A. This movement is achieved by applying the first current I1 to all first coils 301 of the four actuators 3 as described above.

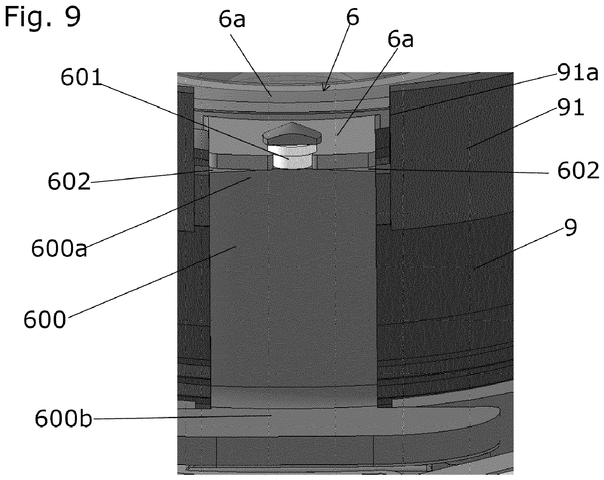

Further, as particularly indicated in Figs. 8 and 9, the lens shaping member 6 comprises an annular or circumferential region 6b that defines said area 22 as well as four arms 6a protruding from this region 6b, wherein each arms 6a is coupled to one of the actuators 3 for moving the lens shaping member 6 so that the annular region 6b of the lens shaping member can be pushed against the membrane 22 (or can pull on the membrane 22) in a defined fashion.

Particularly, for moving the lens shaping member 6 with the actuators 3, each magnet 5 is connected to the lens shaping member 6 while the first and the second coils 301, 302 are rigidly coupled to the container 20 of the lens 2 (e.g. via a lens barrel 9, see below). Alternatively, it is also possible to connect the coils 301, 302 to the lens shaping member 6 and to rigidly couple the magnets to the container 20.

In order to connect the respective magnet 5 to the lens shaping member 6, each actuator 3 comprises a pusher, as shown e.g. in Figs. 8, 9 and 10.

The respective pusher 600 extends along the optical axis A of the lens 2 (outside the lens barrel 9) and comprises a first end section 600a and an opposing second end section 600b. The second end section 600b of the respective pusher 600 is connected to a spring structure 40 that is in turn rigidly coupled to the container 20 (e.g. via the lens barrel 9). The spring structure 40 can comprise a circumferential (e.g. rectangular frame 41 as well as four spring elements 42 protruding from the frame 40, wherein each spring element 42 protrudes towards the respective end section 600b of a pusher 600 to which it is connected. The respective spring element 42 can have a meandering shape.

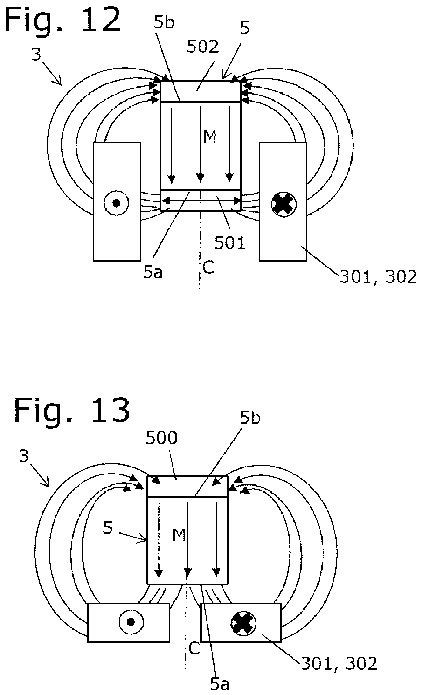

Further, each magnet 5 is connected to an associated second end section 600b of one of the pushers 600, as indicated in Fig. 8. The magnets 5 are arranged such that they face the first and second coil 301, 302 of the corresponding actuator 3 so that the respective magnet 5 can be moved by means of the coils 301, 302 which are rigidly coupled to the container 20 (e.g. via the lens barrel 9). Different ways of arranging a magnet with respect to the coils 301, 302 as well as different ways of configuring the coils 301, 302 will be described in more detail below with respect to Figs. 12 to 15 and Fig. 7.

Now, the first end section 600a of the respective pusher 600 is connected to an associated arm 6a of the lens shaping member 6 so that a force that acts on the respective magnet 5 due to a corresponding current applied to the respective first and/or second coil 301, 302 can move the respective magnet 5 and therewith - via the respective pusher 600 - the lens shaping member 6.

Furthermore, particularly, the first end section 600a of the respective pusher 600 is connected to the respective arm 6a of the lens shaping member 6) via a flexible connection element 601 so that the lens shaping member 6 can be tilted with respect to the respective pusher 600 by a certain amount. Further, chamfers 602 can be provided on the first end sections 600a of the pushers 600 to improve connection strength while maintaining movability of the lens shaping member 6.

Particularly, due to the fact that the respective pusher 600 connects to the membrane (via the lens shaping member 6) on one end and to the spring structure 40 on the other end, each pusher 600 can be individually moved along the optical axis A in a guided fashion.

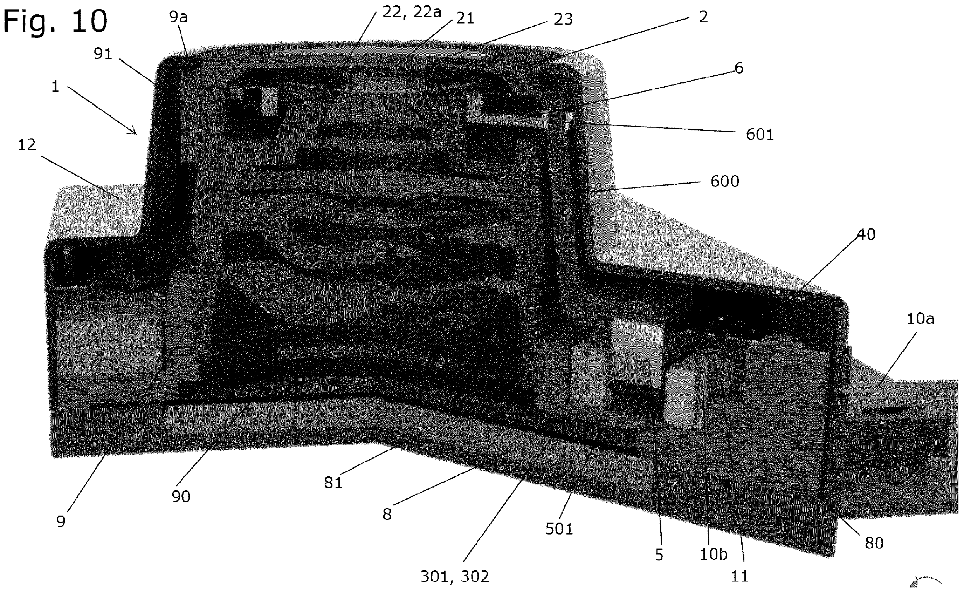

As further shown in Figs. 8 and 10, the optical device 1 comprises an image sensor 8 and a lens barrel 9 comprising at least one rigid lens 90, wherein the lens barrel 9 is rigidly coupled to the image sensor 8, and wherein the container 20 of the lens 2 is arranged on a top side 9a of the lens barrel 9 so that the container 20, particularly said area 22a of the membrane 22, faces the at least one rigid lens 90 and the image sensor 8. Particularly, the container 20 can be held by a spacer 91 that is arranged on said top side 9a, wherein the spacer 91 comprises four recesses 91a for each arm 6a of the lens shaping member 6, wherein the respective arm 6a protrudes out of the associated recess 91a so that it can be connected to the respective pusher 600 which is arranged outside the lens barrel 9.

Further particularly, the lens barrel 9 is mounted to a base 80 of the optical device 1 which base 80 also holds the image sensor 8 (which can comprise an IR filter 81) as well as a substrate 10 (e.g. PCB) that can comprise the coils 301, 302 as integral parts of the substrate 10. Particularly, said substrate may comprise recesses 300 in the form of through holes for receiving the respective magnet 5, wherein each recess is surrounded by a first and a second coil 301, 302. Here, the common coil axis C of the respective first and second coil 301, 302 around which axis C the windings of the respective coil 301, 302 extend, are arranged parallel to the optical axis A.

Further, the spring structure 40 may also be mounted to the base 80, which may be formed out of a plastic material.

Using the above-described pusher configuration, the first and the second coil 301, 302 of the respective actuator 3 as well as the respective magnet 5 can arranged further outward in a lateral direction than the lens 2 and the lens barrel 9 (e.g. on a lateral outside of the lens barrel 9 which allows a compact design of the optical device 1.

Having the first coils 301 connected in series as described above (e.g. Fig. 1), all magnets 5 can be moved upwards (or downwards) in Figs. 8 of 10 when a corresponding first current I1 is applied to the first coils 301 which allows to move the lens shaping member upwards (or downwards) so that the curvature of the area 22a is adjusted accordingly. This allows to adjust the focal length of the lens 2 (cf. also Fig. 17 (B)). The magnets 5 can be configured such that the current I1 has the same direction D in all first coils (cf. e.g. Fig. 1).

Further, applying a second current I2 to the first pair 31 of second coils 302 (first actuator pair 33), the lens shaping member 6 is tilted about the first axis 60 using said first pair 33 of actuators 3 when said second current I2 is applied to the corresponding first pair 31 of second coils 302 (cf. e.g. Fig. 1).

Particularly, the second coils 302 of said first pair 31 of second coils 302 can be connected in series such that the second current I2 flows through one of said second coils 302 of the first pair 31 of second coils 302 in a first current direction D1 and through the other second coil 302 of said first pair 31 of second coils 302 in a current direction D2 that is opposite the first current direction D1. Thus, referring to Fig. 8, the magnets can be configured such that one of the magnets 5 of the first pair of actuators 33 moves upwards, while the other one moves downwards such that the lens shaping member 6 is tilted about the first axis (cf. also Fig. 1 as well as Fig. 17 (C)).

Further, in a similar manner, applying a third current I3 to the second pair 32 of second coils 302 (second actuator pair 34), the lens shaping member 6 is tilted about the second axis 61 using said second pair 34 of actuators 3 when said third current I3 is applied to the corresponding second pair 32 of second coils 302 (cf. e.g. Fig. 1).

Also here, the second coils 302 of said second pair 32 of second coils 302 can be connected in series such that the third current I3 flows through one of said second coils 302 of the second pair 32 of second coils 302 in a second current direction D3 and through the other second coil 302 of said second pair 32 of second coils 302 in a current direction D4 that is opposite the second current direction D3. Thus, referring to Fig. 8, again the magnets 5 can be configured such that one of the magnets 5 of the second pair of actuators 33 moves upwards, while the other one moves downwards such that the lens shaping member 6 is tilted about the second axis (cf. also Fig. 1 as well as Fig. 17 (C)).

The inidiviual magnet 5 of an actuator can be configured in different ways in order to achieve an upward or downward movement of the respective magnet 5 along the optical axis A when interacting with the associate first and/or second coil 301, 302. Such configurations are shown for an actuator 3 in the Figs. 12 to 13.

According to Fig. 12, the respective magnet 5 can comprise a magnetization M that extends parallel to the optical axis A. Here, the respective magnet 5 is configured to protrude into the respective recess 300 (see e.g. above), which recess 300 is also denoted as orifice 300 herein. This recess 300 is surrounded by the first and the second coil 301, 302 of the actuator 3 that comprise windings 311, 312 that extend around a common coil axis C of the first and the second coil 301, 302. Particularly, the magnet 5 extends in the direction of the coil axis C into the recess 300. Particularly, the magnet 5 comprises a first magnetic flux return structure 501 that is connected to a front side 5a of the magnet 5. The magnet 5 may further comprise a second magnetic flux return structure 502 connected to a back side 5b of the magnet which back side 5b faces away from said front side 5a. Particularly, the magnet 5 is connected to the associated pusher 600 via the back side 5b and can be moved up and down in Figs. 12 to 15.

Fig. 13 shows an alternative configuration, wherein the magnet 5 faces the first and the second coil 301, 302 of its actuator 3 in a direction of a common coil axis C of the first and the second coil 301, 302, wherein the windings 311, 312 of the first and the second coil 301, 302 extend around said common coil axis C. Here, the magnet 5 may comprises a magnetic flux return structure 500 arranged on a back side 5b of the magnet 5 that faces away from the first and the second coil 301, 302. Also here, a pusher 600 may connect to the back side 5b.

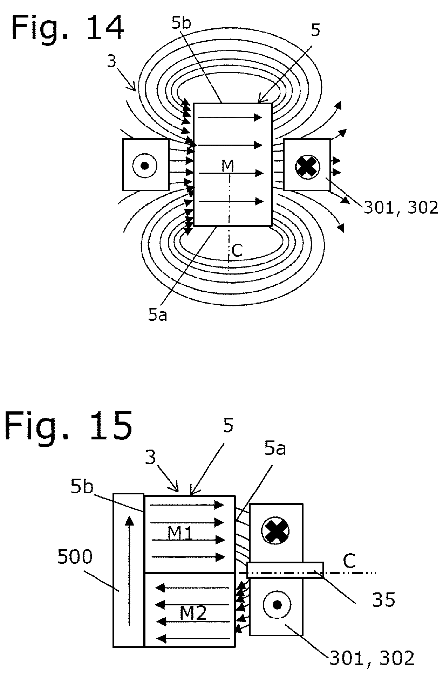

Fig. 14 shows a further variant where the magnet 5 is arranged in the recess 300 surrounded by the first and the second coil 301, 302, wherein here the magnetization M extends essentially perpendicular to the common coil axis C (and to the optical axis A). Here, the magnet 5 does not comprise return structures.

Fig. 15 shows a further variant, wherein the magnet 5 faces the associated first and second coil 301, 302 and comprises a first section 51 comprising a first magnetization M1 and an adjacent second section 52 comprising a second magnetization M2, wherein the first and the second magnetization M1, M2 are antiparallel and extend along the common coil axis C of the first and second coil 301, 302. Here, the magnetizations M1, M2 and the common coil axis C are essentially perpendicular to the optical axis A.

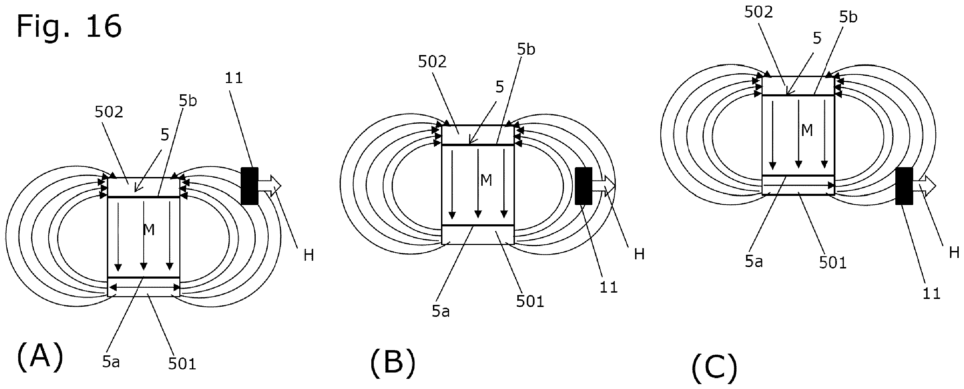

In order to control the tilting movement of the lens shaping member 6, each actuator 3 may comprise a Hall sensor 11 as shown in Figs. 10 and 16.

Particularly, when the Hall sensor 11 is placed laterally with regard to the moving magnet (the respective Hall sensor 11 can be arranged on the substrate 10 or connected to the substrate 10 via a flexible connector 10b as shown in Fig. 10 such that upon assembly of the optical device 1 the respective connector 10b can be bent to arrange the respective Hall sensor 11 in a desired installation space)

The sensing direction H along which the sensor 11 measures the magnetic field of the magnet 5 can be oriented perpendicular to the optical axis, such that in the non-tilted position of the lens shaping member 6 (Fig. 16 (B)) the magnetic field is essentially perpendicular to the sensing direction and comprises a significantly larger component in the sensing direction in both tilted positions of the lens shaping member shown in Figs. 16(A) and 16(C).

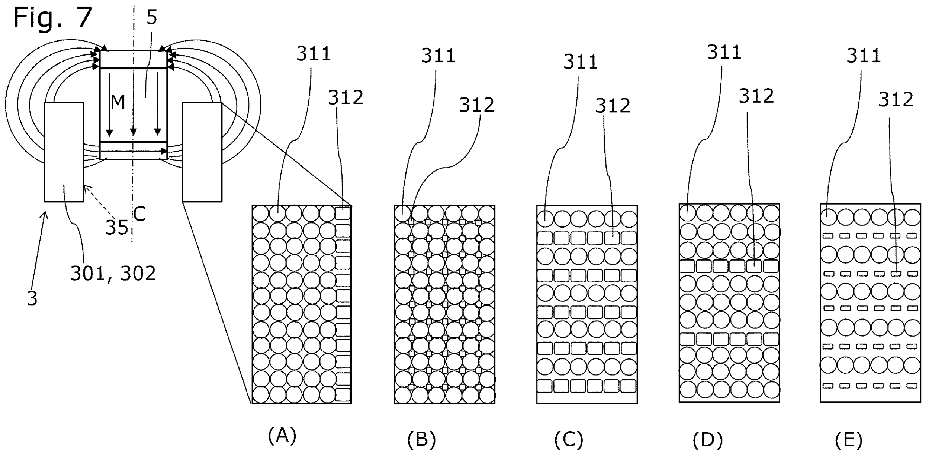

Furthermore, the individual windings 311 of the first coils 301 as well as the individual windings of the second coils 302 can be configured as shown in Fig. 7.

Particularly, the windings 312 of the second coil 302 of the respective actuator 3 are wound or arranged on the windings 311 of the first coil 301 of the respective actuator 3 as indicated in detail (A) of Fig. 7. Alternatively, the windings 311 of the first coil 301 of the respective actuator 3 are wound or arranged on the windings 312 of the second coil 302 of the respective actuator 3.

Alternatively, each winding 311 of the first coil 301 of the respective actuator 3 may also extends adjacent a winding 312 of the second coil 302 of the respective actuator 3 as shown in detail (B) of Fig. 7.

Furthermore, windings 311 of the first coil 301 of the respective actuator 3 may be stacked on top of one another perpendicular to a common coil axis C of the first coil 301 and the second coil 302 of the respective actuator 3 while windings 312 of the second coil 302 may be stacked on top of one another perpendicular to said common coil axis C (cf. detail (C) of Fig. 7).

Further, as shown in Fig. 7 (D), the first coil 301 of the respective actuator 3 may comprise more windings 311 than the second coil 302 of the respective actuator 3.

Furthermore, as shown in Fig. 7 (E), a wire (or conductor) forming the windings 311 of the first coil 301 of the respective actuator 3 may comprises a larger cross section than a wire/conductor forming the windings 312 of the second coil 302 of the respective actuator 3.

By selecting the number of windings and the respective cross section of the wire/conductor, the magnitude of the force that can be generated with the respective coil 301, 302 can be adapted to a specific need. Particularly, adjusting the focal length usually requires a larger force than tilting the lens shaping member by means of the second coils.

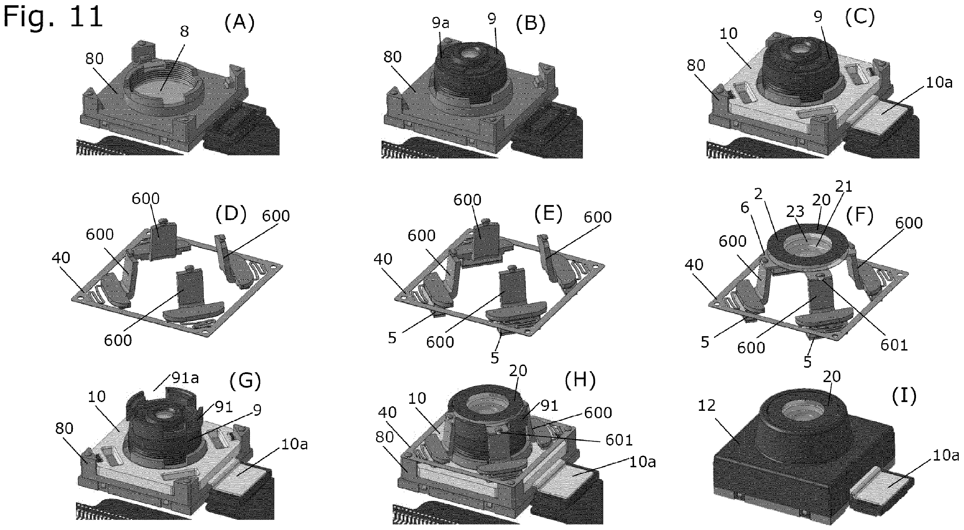

Finally, Fig. 11(A) to (I) shows a possible assembly process for mounting individual components of an embodiment of an optical device 1 according to the present invention. According to Fig. 11 the following steps may be conducted:
- connecting the image sensor 8 of the optical device 1 to the base 80 of the optical device 1 (cf. Fig. 11(A)),
- mounting the lens barrel 9 comprising said at least one rigid lens 90 to the base 80 so that the lens barrel 9 faces the image sensor 8. Particularly, the base 80 can comprise a circular recess with an internal thread, wherein the lens barrel 9 can comprise an external thread that is configured to engage with said internal thread for mounting the lens barrel 9 to the base 90 (cf. Fig. 11(B)),
- providing four first and four second coils 301, 302 and mounting the first and the second coils to the base 80, wherein particularly said first and second coils 301, 302 are comprised by a substrate 10 (e.g. a printed circuit board) that is mounted to the base 80, and wherein particularly the substrate 10 comprises recesses 300, wherein each recess 300 is surrounded by a first and a second coil 301, 302 and configured for receiving a magnet 5 for interacting with the respective first and second coil 301, 302 (cf. Fig. 11(C)),
- providing four pushers (e.g. for each of the four actuators) 600 connected to a spring structure 40, wherein the respective pusher 600 comprises a first and a second end section 600a, 600b (cf. Fig. 11(D)),
- providing four magnets 5 and connecting each magnet 5 to a second end section 600b of a pusher 600 (cf. Fig. 11(E)),
- connecting a lens 2 comprising a container 20 and a lens shaping member 6 to the pushers 600, wherein the container 20 comprises a first wall 22 in form of a transparent an elastically deformable membrane and a transparent second wall 23 facing the first wall 22, wherein the container 20 is filled with a transparent fluid 21 that is arranged between the two walls 22, 23, and wherein the lens shaping member 6 is preferably bonded to the membrane 22 and comprises arms 6a protruding from a circumferential region 6b of the lens shaping member 6, wherein said arms 6a are connected to the pushers 600 (e.g. via flexible connection elements 601) in order to connect the lens 2 to the pushers 600 (cf. Fig. 11(F)),
- connecting a spacer 91 to a top side 9a of the lens barrel 9 (cf. Fig. 11(G)),
- connecting the spring structure 40 to the base 80, wherein the container 20 is arranged on the spacer 91 such that each arm 6a of the lens shaping member 6 protrudes through a recess 91a of the spacer 91 and the magnets 5 are arranged in the recesses 300 of the substrate 10 while the pushers 600 extend along the optical axis A of the lens 2 on an outside of the lens barrel 9 (cf. Fig. 11(H)), and
- connecting a housing 12 (forming e.g. a shield against electro-magnetic fields) to the base 80 (cf. Fig. 11(I)).

## Claims

1. Optical device (1), comprising
- a lens (2) having an adjustable focal length,
- four actuators (3) for adjusting the focal length of said lens (2) and for stabilizing an image generated by the optical device (1) with help of said lens (2), wherein the lens of the optical device comprises a container that is filled with a transparent fluid, wherein the container comprises a first wall formed by an elastically deformable membrane and an opposing second transparent wall, wherein the fluid is arranged between the two walls, and wherein the optical device comprises a lens shaping member configured to interact with the membrane for adjusting the focal length of the lens and/or for stabilizing said image, and wherein each actuator (3) comprises an electrically conducting first coil (301) for adjusting said focal length,
**characterized in that**
each actuator (3) comprises a second electrically conducting coil (302) for stabilizing said image, wherein
the respective actuator (3) comprises a magnet (5) that is configured to interact with the first and the second coil (301, 302) of the respective actuator (3),
wherein the first coils (301) are connected in series, wherein the optical device (1) is configured to apply a first current (I1) to the first coils (301) for adjusting said focal length, and wherein for stabilizing said image, the optical device (1) is configured to apply a second current (I2) to a first pair (31) of second coils (302) and a third current (I3) to a second pair (32) of second coils (302), and wherein
the optical device is configured to tilt the lens shaping member relative to the container about a first axis using a first pair of actuators when said second current is applied to the corresponding first pair of second coils in order to tilt said area of the membrane relative to the second wall of the container so as to shift said image in a first direction for stabilizing said image.

2. Optical device (1) according to claim 1, wherein each magnet (5) is connected to the lens shaping member (6) which is moveable with respect to the container (20), and wherein the first and the second coils (301, 302) are rigidly coupled to the container.

3. Optical device (1) according to claim 1, wherein each magnet (5) is rigidly coupled to the container (20), and wherein the first and the second coils (301, 302) are connected to the lens shaping member (6) which is moveable with respect to the container (20).

4. Optical device (1) according to claim 1, wherein the four actuators (3) are comprised of a first pair (33) of two opposing actuators (3) and a second pair (34) of two opposing actuators (3), wherein the second coils (302) of the first pair (33) of actuators (3) form said first pair (31) of second coils (302), and wherein the second coils (302) of the second pair (34) of actuators (3) form said second pair (32) of second coils (302), and wherein the optical device (1) is configured to tilt the lens shaping member (6) relative to the container (20) about a first axis (60) using said first pair (33) of actuators (3) when said second current (I2) is applied to the corresponding first pair (31) of second coils (301) in order to shift said image in a first direction for stabilizing said image, and/or wherein the optical device (1) is configured to tilt the lens shaping member (6) relative to the container (20) about a second axis (61) using said second pair (34) of actuators (3) when said third current (I3) is applied to the corresponding second pair (32) of second coils (302) in order to shift said image in a second direction for stabilizing said image.

5. Optical device (1) according to claim 1, wherein the second coils (302) of said first pair (31) of second coils (302) are connected in series such that the second current (I2) flows through one of said second coils (302) of the first pair (31) of second coils (302) in a first current direction (D1) and through the other second coil (302) of said first pair (31) of second coils (302) in a current direction (D2) that is opposite the first current direction (D1) and/or such that the first pair (33) of actuators (3) generates two forces that point in opposite directions; and/or wherein the second coils (302) of said second pair (32) of second coils (302) are connected in series such that the third current (I3) flows through one of said second coils (302) of the second pair (32) of second coils (302) in a second current direction (D3) and through the other second coil (302) of said second pair (32) of second coils (302) in a current direction (D4) that is opposite the second current direction (D3) and/or such that the second pair (34) of actuators (3) generates two forces that point in opposite directions.

6. Optical device (1) according to claim 5, wherein the four actuators (3) are comprised of a first pair (33) of two opposing actuators (3) and a second pair (34) of two opposing actuators (3), wherein the second coils (302) of the first pair (33) of actuators (3) form said first pair (31) of second coils (302), and wherein the second coils (302) of the second pair (34) of actuators (3) form said second pair (32) of second coils (302), wherein the optical device (1) is configured to tilt the lens shaping member (6) relative to the container (20) about a first axis (60) using said first pair (33) of actuators (3) when said second current (I2) is applied to the corresponding first pair (31) of second coils (302) such that an amount of force added on one side of the lens shaping member (6) by means of a second coil (302) of the first pair (33) of actuators (3) and the magnet (5) interacting with this second coil (302) is simultaneously removed on an opposing side of the lens shaping member (6) by means of the other second coil (302) of the first pair (33) of actuators (3) and the magnet (5) interacting with this other second coil (302), so as to prevent a shift in the focal length of the lens (2) upon said tilting of the lens shaping member (6) about said first axis (60); and/or that the optical device (1) is configured to tilt the lens shaping member (6) relative to the container (20) about a second axis (61) using said second pair (34) of actuators (3) when said third current (I3) is applied to the corresponding second pair (32) of second coils (302) such that an amount of force added on one side of the lens shaping member (6) by means of a second coil (302) of the second pair (34) of actuators (3) and the magnet (5) interacting with this second coil (302) is simultaneously removed on an opposing side of the lens shaping member (6) by means of the other second coil (302) of the second pair (34) of actuators (3) and the magnet (5) interacting with this other second coil (302), so as to prevent a shift in the focal length of the lens (2) upon said tilting of the lens shaping member (6) about said second axis (61).

7. Optical device (1) according to claim 1, wherein the first and the second coil (301, 302) of the respective actuator (3) comprise a plurality of windings (311, 312), wherein the windings (312) of the second coil (302) of the respective actuator (3) are wound on the windings (311) of the first coil (301) of the respective actuator (3), or that the windings (311) of the first coil (301) of the respective actuator (3) are wound on the windings (312) of the second coil (302) of the respective actuator (3).

8. Optical device (1) according to claim 1, wherein the first and the second coil (301, 302) of the respective actuator (3) comprise a plurality of windings (311, 312), wherein each winding (311) of the first coil (301) of the respective actuator (3) extends adjacent a winding (312) of the second coil (302) of the respective actuator (3).

9. Optical device (1) according to claim 1, wherein the first and the second coil (301, 302) of the respective actuator (3) comprise a plurality of windings (311, 312), wherein windings (311) of the first coil (301) of the respective actuator (3) are stacked on top of one another perpendicular to a common coil axis (C) of the first coil (301) and the second coil (302) of the respective actuator (3) while windings (312) of the second coil (302) are stacked on top of one another perpendicular to said common coil axis (C).

10. Optical device (1) according to claim 1, wherein the four first coils (301) form a continuous conductor configured to simultaneously interact with all of said magnets (5) of said actuators (3) for adjusting the focal length of the lens (2), and wherein
the respective magnet (5) faces the first and the second coil (301, 302) of its actuator (3) in a direction of a common coil axis (C) of the first and the second coil (301, 302).

11. Optical device (1) according to claim 10, wherein the respective magnet (5) comprises a magnetic flux return structure (500) arranged on a side (5b) of the magnet (5) that faces away from the first and the second coil (301, 302).

12. Optical device (1) according to claim 10, wherein the respective magnet (5) comprises a first section (51) comprising a first magnetization (M1) and an adjacent second section (52) comprising a second magnetization (M2), wherein the first and the second magnetization (M1, M2) are antiparallel.

13. Optical device (1) according to claim 1, wherein the four first coils (301) form a continuous conductor configured to simultaneously interact with all of said magnets (5) of said actuators (3) for adjusting the focal length of the lens (2), and wherein the respective magnet (5) protrudes into an orifice (300) surrounded by the first and the second coil (301, 302) of its actuator (3) in a direction of a common coil axis (C) of the first and the second coil (301, 302).

14. Method for assembling an optical device (1), comprising the steps of:
- connecting an image sensor (8) of the optical device (1) to a base (80) of the optical device (1),
- mounting a lens barrel (9) comprising at least one rigid lens (90) to the base (80) so that the lens barrel (9) faces the image sensor (8) and the lens barrel (9) is focused on the image sensor (8),
- providing four first and four second coils (301, 302) and mounting the first and the second coils to the base (80), wherein said first and second coils (301, 302) are comprised by a substrate (10) that is mounted to the base (80), and wherein the substrate (10) comprises recesses (300), wherein each recess (300) is surrounded by a first and a second coil (301, 302) and configured for receiving a magnet (5),
- providing four pushers (600) connected to a spring structure (40), wherein the respective pusher (600) comprises a first and a second end section (600a, 600b),
- providing four magnets (5) and connecting each magnet (5) to a second end section (600b) of a pusher (600),
- connecting a lens (2) comprising a container (20) and a lens shaping member (6) to the pushers (600), wherein the container (20) comprises a first wall (22) in form of a transparent an elastically deformable membrane and a transparent second wall (23) facing the first wall (22), wherein the container (20) is filled with a fluid (21) that is arranged between the two walls (22, 23), and wherein the lens shaping member (6) is bonded to the membrane (22) and comprises arms (6a) protruding from a circumferential region (6b) of the lens shaping member (6), wherein said arms (6a) are connected to the pushers (600) in order to connect the lens (2) to the pushers (600),
- connecting a spacer (91) to a top side (9a) of the lens barrel (9),
- connecting the spring structure (40) to the base (80), wherein the container (20) is arranged on the spacer (91) such that each arm (6a) of the lens shaping member (6) protrudes through a recess (91a) of the spacer (91) and the magnets (5) are particularly arranged in the recesses (300) of the substrate (10) while the pushers (600) extend along the optical axis (A) of the lens (2) on an outside of the lens barrel (9), and
- connecting a housing (12) to the base (80).

15. Optical device according to claim 1, wherein the optical device is configured to tilt the lens shaping member relative to the container about a second axis using said second pair of actuators when said third current is applied to the corresponding second pair of second coils in order to tilt said area of the membrane relative to the second wall of the container so as to shift said image in a second direction for stabilizing said image, wherein particularly the second direction runs perpendicular to the first direction.

## Patentansprüche

1. Optische Vorrichtung (1), aufweisend
- eine Linse (2) mit einer einstellbare Brennweite,
- vier Aktuatoren (3) zum Einstellen der Brennweite besagter Linse (2) und zum Stabilisieren eines von der optischen Vorrichtung (1) mit Hilfe besagter Linse (2) erzeugten Bildes, wobei die Linse der optischen Vorrichtung einen Behälter aufweist, der mit einem transparenten Fluid gefüllt ist, wobei der Behälter eine erste Wand, die aus einer elastisch verformbaren Membran ausgebildet ist, und eine gegenüberliegende zweite transparente Wand aufweist, wobei das Fluid zwischen den beiden Wänden angeordnet ist, und wobei die optische Vorrichtung ein Linsenformungselement aufweist, das dazu eingerichtet ist, mit der Membran zusammenzuwirken, zum Anpassen der Brennweite der Linse und/oder zum Stabilisieren besagten Bildes, und wobei jeder Aktuator (3) eine elektrisch leitende erste Spule (301) zum Einstellen besagter Brennweite umfasst,
**dadurch gekennzeichnet, dass**
jeder Aktuator (3) eine zweite elektrisch leitende Spule (302) zum Stabilisieren besagten Bildes aufweist, wobei
der jeweilige Aktuator (3) einen Magneten (5) aufweist, der zum Interagieren mit der ersten und der zweiten Spule (301, 302) des jeweiligen Aktuators (3) eingerichtet ist,
wobei die ersten Spulen (301) in Reihe geschaltet sind, wobei die optische Vorrichtung (1) zum Anlegen eines ersten Stroms (I1) an die ersten Spulen (301) zum Einstellen besagter Brennweite eingerichtet ist, und wobei zum Stabilisieren besagten Bildes die optische Vorrichtung (1) zum Anlegen eines zweiten Stroms (I2) an ein erstes Paar (31) von zweiten Spulen (302) und eines dritten Stroms (I3) an ein zweites Paar (32) von zweiten Spulen (302) eingerichtet ist, und wobei
die optische Vorrichtung so eingerichtet ist, dass sie das Linsenformungselement in Bezug auf den Behälter um eine erste Achse unter Verwendung eines ersten Paares von Aktuatoren kippt, wenn besagter zweiter Strom an das jeweilige erste Paar von zweiten Spulen angelegt wird, um besagten Bereich der Membran in Bezug auf die zweite Wand des Behälters so zu kippen, dass das Bild in einer ersten Richtung zum Stabilisieren besagten Bildes verschoben wird.

2. Optische Vorrichtung (1) gemäß Anspruch 1, wobei jeder Magnet (5) mit dem Linsenformungselement (6) verbunden ist, das in Bezug auf den Behälter (20) beweglich ist, und wobei die ersten und die zweiten Spulen (301, 302) starr mit dem Behälter gekoppelt sind.

3. Optische Vorrichtung (1) gemäß Anspruch 1, wobei jeder Magnet (5) starr mit dem Behälter (20) gekoppelt ist, und wobei die ersten und die zweiten Spulen (301, 302) mit dem Linsenformungselement (6) verbunden sind, das in Bezug auf den Behälter (20) beweglich ist.

4. Optische Vorrichtung (1) gemäß Anspruch 1, wobei die vier Aktuatoren (3) aus einem ersten Paar (33) von zwei einander gegenüberliegenden Aktuatoren (3) und einem zweiten Paar (34) von zwei einander gegenüberliegenden Aktuatoren (3) bestehen, wobei die zweiten Spulen (302) des ersten Paares (33) von Aktuatoren (3) besagtes erstes Paar (31) von zweiten Spulen (302) ausbilden, und wobei die zweiten Spulen (302) des zweiten Paares (34) von Aktuatoren (3) besagtes zweites Paar (32) von zweiten Spulen (302) ausbilden, und wobei die optische Vorrichtung (1) zum Kippen des Linsenformungselements (6) relativ zu dem Behälter (20) um eine erste Achse (60) unter Verwendung besagten ersten Paares (33) von Aktuatoren (3) eingerichtet ist, wenn besagter zweiter Strom (I2) an das entsprechende erste Paar (31) von zweiten Spulen (301) angelegt wird, um besagtes Bild in eine erste Richtung zu verschieben, um besagtes Bild zu stabilisieren, und/oder wobei die optische Vorrichtung (1) zum Kippen des Linsenformungselements (6) relativ zu dem Behälter (20) um eine zweite Achse (61) unter Verwendung besagten zweiten Paares (34) von Aktuatoren (3) eingerichtet ist, wenn besagter dritter Strom (I3) an das entsprechende zweite Paar (32) von zweiten Spulen (302) angelegt wird, um besagtes Bild in eine zweite Richtung zum Stabilisieren besagten Bildes zu verschieben.

5. Optische Vorrichtung (1) gemäß Anspruch 1, wobei die zweiten Spulen (302) von besagtem ersten Paar (31) von zweiten Spulen (302) in Reihe verbunden sind, so dass der zweite Strom (I2) durch eine der zweiten Spulen (302) des ersten Paares (31) von zweiten Spulen (302) in einer ersten Stromrichtung (D1) fließt und durch die andere zweite Spule (302) des ersten Paares (31) von zweiten Spulen (302) in einer Stromrichtung (D2) fließt, die der ersten Stromrichtung (D1) entgegengesetzt ist, und/oder so, dass das erste Paar (33) von Aktuatoren (3) zwei Kräfte generiert, die in entgegengesetzte Richtungen zeigen; und/oder wobei die zweiten Spulen (302) des zweiten Paares (32) von zweiten Spulen (302) in Reihe geschaltet sind, so dass der dritte Strom (I3) durch eine der zweiten Spulen (302) des zweiten Paares (32) von zweiten Spulen (302) in einer zweiten Stromrichtung (D3) fließt und durch die andere zweite Spule (302) des zweiten Paares (32) von zweiten Spulen (302) in einer Stromrichtung (D4) fließt, die der zweiten Stromrichtung (D3) entgegengesetzt ist und/oder so, dass das zweite Paar (34) von Aktuatoren (3) zwei Kräfte generiert, die in entgegengesetzte Richtungen zeigen.

6. Optische Vorrichtung (1) gemäß Anspruch 5, wobei die vier Aktuatoren (3) aus einem ersten Paar (33) von zwei gegenüberliegenden Aktuatoren (3) und einem zweiten Paar (34) von zwei gegenüberliegenden Aktuatoren (3) bestehen, wobei die zweiten Spulen (302) des ersten Paares (33) von Aktuatoren (3) besagtes erste Paar (31) von zweiten Spulen (302) bilden, und wobei die zweiten Spulen (302) des zweiten Paares (34) von Aktuatoren (3) besagtes zweites Paar (32) von zweiten Spulen (302) bilden, wobei die optische Vorrichtung (1) eingerichtet ist, das Linsenformungselement (6) relativ zu dem Behälter (20) um eine erste Achse (60) zu kippen, wobei besagtes erstes Paar (33) von Aktuatoren (3) verwendet wird, wenn besagter zweiter Strom (I2) an das entsprechende erste Paar (31) von zweiten Spulen (302) angelegt wird, so dass ein Betrag an Kraft, der auf einer Seite des Linsenformungselements (6) mittels einer zweiten Spule (302) des ersten Paares (33) von Aktuatoren (3) und des mit dieser zweiten Spule (302) zusammenwirkenden Magneten (5) hinzugefügt wird, gleichzeitig auf einer gegenüberliegenden Seite des Linsenformungselements (6) mittels der anderen zweiten Spule (302) des ersten Paares (33) von Aktuatoren (3) und des mit dieser anderen zweiten Spule (302) zusammenwirkenden Magneten (5) entfernt wird, um so eine Verschiebung der Brennweite der Linse (2) beim besagten Kippen des Linsenformungselements (6) um die besagte erste Achse (60) zu verhindern; und/oder dass die optische Vorrichtung (1) zum Kippen des Linsenformungselements (6) relativ zu dem Behälter (20) um eine zweite Achse (61) unter Verwendung besagten zweiten Paares (34) von Aktuatoren (3) eingerichtet ist, wenn besagter dritter Strom (I3) an das entsprechende zweite Paar (32) von zweiten Spulen (302) angelegt wird, so dass ein Betrag an Kraft, der auf einer Seite des Linsenformungselements (6) mittels einer zweiten Spule (302) des zweiten Paares (34) von Aktuatoren (3) und des mit dieser zweiten Spule (302) zusammenwirkenden Magneten (5) hinzugefügt wird, gleichzeitig auf einer gegenüberliegenden Seite des Linsenformungselements (6) mittels der anderen zweiten Spule (302) des zweiten Paares (34) von Aktuatoren (3) und des mit dieser anderen zweiten Spule (302) zusammenwirkenden Magneten (5) entfernt wird, um so eine Verschiebung der Brennweite der Linse (2) beim besagten Kippen des Linsenformungselements (6) um besagte zweite Achse (61) zu verhindern.

7. Optische Vorrichtung (1) gemäß Anspruch 1, wobei die erste und die zweite Spule (301, 302) des jeweiligen Aktuators (3) eine Mehrzahl von Wicklungen (311, 312) aufweisen, wobei die Wicklungen (312) der zweiten Spule (302) des jeweiligen Aktuators (3) auf die Wicklungen (311) der ersten Spule (301) des jeweiligen Aktuators (3) gewickelt sind, oder dass die Wicklungen (311) der ersten Spule (301) des jeweiligen Aktuators (3) auf die Wicklungen (312) der zweiten Spule (302) des jeweiligen Aktuators (3) gewickelt sind.

8. Optische Vorrichtung (1) gemäß Anspruch 1, wobei die erste und die zweite Spule (301, 302) des jeweiligen Aktuators (3) eine Vielzahl von Wicklungen (311, 312) aufweisen, wobei sich jede Wicklung (311) der ersten Spule (301) des jeweiligen Aktuators (3) neben einer Wicklung (312) der zweiten Spule (302) des jeweiligen Aktuators (3) erstreckt.

9. Optische Vorrichtung (1) gemäß Anspruch 1, wobei die erste und die zweite Spule (301, 302) des jeweiligen Aktuators (3) eine Vielzahl von Wicklungen (311, 312) aufweisen, wobei Wicklungen (311) der ersten Spule (301) des jeweiligen Aktuators (3) senkrecht zu einer gemeinsamen Spulenachse (C) der ersten Spule (301) und der zweiten Spule (302) des jeweiligen Aktuators (3) übereinander angeordnet sind, während Wicklungen (312) der zweiten Spule (302) senkrecht zu besagter gemeinsamer Spulenachse (C) übereinander angeordnet sind.

10. Optische Vorrichtung (1) gemäß Anspruch 1, wobei die vier ersten Spulen (301) einen durchgehenden Leiter ausbilden, der dazu eingerichtet ist, gleichzeitig mit allen besagten Magneten (5) von besagten Aktuatoren (3) zum Anpassen der Brennweite der Linse (2) zu interagieren, und wobei
der jeweilige Magnet (5) der ersten und der zweiten Spule (301, 302) seines Aktuators (3) in einer Richtung einer gemeinsamen Spulenachse (C) der ersten und der zweiten Spule (301, 302) zugewandt ist.

11. Optische Vorrichtung (1) gemäß Anspruch 10, wobei der jeweilige Magnet (5) eine Magnetflussrückführungsstruktur (500) aufweist, die auf einer Seite (5b) des Magneten (5) angeordnet ist, die von der ersten und der zweiten Spule (301, 302) abgewandt ist.

12. Optische Vorrichtung (1) gemäß Anspruch 10, wobei der jeweilige Magnet (5) einen ersten Abschnitt (51), aufweisend eine erste Magnetisierung (M1), und einen benachbarten zweiten Abschnitt (52), aufweisend eine zweite Magnetisierung (M2), aufweist, wobei die erste und die zweite Magnetisierung (M1, M2) antiparallel sind.

13. Optische Vorrichtung (1) gemäß Anspruch 1, wobei die vier ersten Spulen (301) einen durchgehenden Leiter ausbilden, der dazu eingerichtet ist, gleichzeitig mit allen besagten Magneten (5) von besagten Aktuatoren (3) zusammenzuwirken, zum Einstellen der Brennweite der Linse (2), und wobei der jeweilige Magnet (5) in eine Öffnung (300), die von der ersten und der zweiten Spule (301, 302) seines Aktuators (3) umgeben ist, in einer Richtung einer gemeinsamen Spulenachse (C) der ersten und der zweiten Spule (301, 302) hineinragt.

14. Verfahren zum Zusammenbauen einer optischen Vorrichtung (1), umfassend die Schritte:
- Verbinden eines Bildsensors (8) der optischen Vorrichtung (1) mit einer Basis (80) der optischen Vorrichtung (1),
- Anbringen eines Linsentubus (9), umfassend mindestens eine starre Linse (90), an der Basis (80), so dass der Linsentubus (9) dem Bildsensor (8) zugewandt ist und der Linsentubus (9) auf den Bildsensor (8) fokussiert ist,
- Bereitstellen von vier ersten und vier zweiten Spulen (301, 302) und Anbringen der ersten und der zweiten Spule an der Basis (80), wobei besagte erste und zweite Spulen (301, 302) von einem Substrat (10) umfasst sind, das an der Basis (80) angebracht ist, und wobei das Substrat (10) Aussparungen (300) aufweist, wobei jede Aussparung (300) von einer ersten und einer zweiten Spule (301, 302) umgeben ist und zur Aufnahme eines Magneten (5) eingerichtet ist,
- Bereitstellen von vier Schiebers (600), die mit einer Federstruktur (40) verbunden sind, wobei der jeweilige Schieber (600) einen ersten und einen zweiten Endabschnitt (600a, 600b) aufweist,
- Bereitstellung von vier Magneten (5) und Verbinden jedes Magneten (5) mit einem zweiten Endabschnitt (600b) eines Schiebers (600),
- Verbinden einer Linse (2), umfassend einen Behälter (20) und ein Linsenformungselement (6), mit den Schiebern (600), wobei der Behälter (20) eine erste Wand (22) in Form einer transparenten und elastisch verformbaren Membran und eine der ersten Wand (22) zugewandte transparente zweite Wand (23) umfasst, wobei der Behälter (20) mit einem Fluid (21) gefüllt ist, das zwischen den beiden Wänden (22, 23) angeordnet ist, und wobei das Linsenformungselement (6) mit der Membran (22) verbunden ist und Arme (6a) umfasst, die von einem Umfangsbereich (6b) des Linsenformungselements (6) abstehen, wobei besagte Arme (6a) mit den Schiebern (600) verbunden sind, um die Linse (2) mit den Schiebern (600) zu verbinden,
- Verbinden eines Abstandshalters (91) mit einer Oberseite (9a) des Linsentubus (9),
- Verbinden der Federstruktur (40) mit der Basis (80), wobei der Behälter (20) so auf dem Abstandshalter (91) angeordnet ist, dass jeder Arm (6a) des Linsenformungselements (6) durch eine Aussparung (91a) des Abstandshalters (91) vorsteht und die Magnete (5) insbesondere in den Aussparungen (300) des Substrats (10) angeordnet sind, während sich die Schieber (600) entlang der optischen Achse (A) der Linse (2) auf einer Außenseite des Linsentubus (9) erstrecken, und
- Verbindung eines Gehäuses (12) mit der Basis (80).

15. Optische Vorrichtung gemäß Anspruch 1, wobei die optische Vorrichtung zum Kippen des Linsenformungselements relativ zu dem Behälter um eine zweite Achse eingerichtet ist, unter Verwendung besagten zweiten Paares von Aktuatoren, wenn besagter dritter Strom an das jeweilige zweite Paar von zweiten Spulen angelegt ist, um besagten Bereich der Membran relativ zu der zweiten Wand des Behälters zu kippen, um so besagtes Bild in einer zweiten Richtung zur Stabilisierung besagten Bildes zu verschieben, wobei insbesondere die zweite Richtung senkrecht zu der ersten Richtung verläuft.

## Revendications

1. Dispositif optique (1), comprenant
- une lentille (2) ayant une longueur focale ajustable,
- quatre actionneurs (3) pour ajuster la longueur focale de ladite lentille (2) et pour stabiliser une image générée par le dispositif optique (1) à l'aide de ladite lentille (2), dans lequel la lentille du dispositif optique comprend un récipient qui est rempli d'un fluide transparent, dans lequel le récipient comprend une première paroi formée d'une membrane élastiquement déformable et une seconde paroi transparente opposée, dans lequel le fluide est agencé entre les deux parois, et dans lequel le dispositif optique comprend un élément de mise en forme de lentille configuré pour interagir avec la membrane pour ajuster la longueur focale de la lentille et/ou pour stabiliser ladite image, et dans lequel chaque actionneur (3) comprend une première bobine électriquement conductrice (301) pour ajuster ladite longueur focale,
**caractérisé en ce que**
chaque actionneur (3) comprend une seconde bobine électriquement conductrice (302) pour stabiliser ladite image, dans lequel
l'actionneur respectif (3) comprend un aimant (5) qui est configuré pour interagir avec la première et la seconde bobine (301, 302) de l'actionneur respectif (3),
dans lequel les premières bobines (301) sont connectées en série, dans lequel le dispositif optique (1) est configuré pour appliquer un premier courant (I1) aux premières bobines (301) pour ajuster ladite longueur focale, et dans lequel pour stabiliser ladite image, le dispositif optique (1) est configuré pour appliquer un deuxième courant (I2) à une première paire (31) de secondes bobines (302) et un troisième courant (I3) à une seconde paire (32) de secondes bobines (302), et dans lequel
le dispositif optique est configuré pour incliner l'élément de mise en forme de lentille par rapport au récipient autour d'un premier axe en utilisant une première paire d'actionneurs lorsque ledit deuxième courant est appliqué à la première paire correspondante de secondes bobines afin d'incliner ladite zone de la membrane par rapport à la seconde paroi du récipient de manière à décaler ladite image dans une première direction pour stabiliser ladite image.

2. Dispositif optique (1) selon la revendication 1, dans lequel chaque aimant (5) est connecté à l'élément de mise en forme de lentille (6) qui est mobile par rapport au récipient (20), et dans lequel la première et la seconde bobines (301, 302) sont couplées de manière rigide au récipient.

3. Dispositif optique (1) selon la revendication 1, dans lequel chaque aimant (5) est couplé de manière rigide au récipient (20), et dans lequel la première et la seconde bobines (301, 302) sont connectées à l'élément de mise en forme de lentille (6) qui est mobile par rapport au récipient (20).

4. Dispositif optique (1) selon la revendication 1, dans lequel les quatre actionneurs (3) sont constitués d'une première paire (33) de deux actionneurs opposés (3) et d'une seconde paire (34) de deux actionneurs opposés (3), dans lequel les secondes bobines (302) de la première paire (33) d'actionneurs (3) forment ladite première paire (31) de secondes bobines (302), et dans lequel les secondes bobines (302) de la seconde paire (34) d'actionneurs (3) forment ladite seconde paire (32) de secondes bobines (302), et dans lequel le dispositif optique (1) est configuré pour incliner l'élément de mise en forme de lentille (6) par rapport au récipient (20) autour d'un premier axe (60) en utilisant ladite première paire (33) d'actionneurs (3) lorsque ledit deuxième courant (I2) est appliqué à la première paire correspondante (31) de secondes bobines (301) afin de décaler ladite image dans une première direction pour stabiliser ladite image, et/ou dans lequel le dispositif optique (1) est configuré pour incliner l'élément de mise en forme de lentille (6) par rapport au récipient (20) autour d'un second axe (61) en utilisant ladite seconde paire (34) d'actionneurs (3) lorsque ledit troisième courant (I3) est appliqué à la seconde paire correspondante (32) de secondes bobines (302) afin de décaler ladite image dans une seconde direction pour stabiliser ladite image.

5. Dispositif optique (1) selon la revendication 1, dans lequel les secondes bobines (302) de ladite première paire (31) de secondes bobines (302) sont connectées en série de sorte que le deuxième courant (I2) s'écoule à travers une desdites secondes bobines (302) de la première paire (31) de secondes bobines (302) dans une première direction de courant (D1) et à travers l'autre seconde bobine (302) de ladite première paire (31) de secondes bobines (302) dans une direction de courant (D2) qui est opposée à la première direction de courant (D1) et/ou de sorte que la première paire (33) d'actionneurs (3) génère deux forces qui sont dirigées dans des directions opposées ; et/ou dans lequel les secondes bobines (302) de ladite seconde paire (32) de secondes bobines (302) sont connectées en série de sorte que le troisième courant (I3) s'écoule à travers une desdites secondes bobines (302) de la seconde paire (32) de secondes bobines (302) dans une seconde direction de courant (D3) et à travers l'autre seconde bobine (302) de ladite seconde paire (32) de secondes bobines (302) dans une direction de courant (D4) qui est opposée à la seconde direction de courant (D3) et/ou de sorte que la seconde paire (34) d'actionneurs (3) génère deux forces qui sont dirigées dans des directions opposées.

6. Dispositif optique (1) selon la revendication 5, dans lequel les quatre actionneurs (3) sont constitués d'une première paire (33) de deux actionneurs opposés (3) et d'une seconde paire (34) de deux actionneurs opposés (3), dans lequel les secondes bobines (302) de la première paire (33) d'actionneurs (3) forment ladite première paire (31) de secondes bobines (302), et dans lequel les secondes bobines (302) de la seconde paire (34) d'actionneurs (3) forment ladite seconde paire (32) de secondes bobines (302), dans lequel le dispositif optique (1) est configuré pour incliner l'élément de mise en forme de lentille (6) par rapport au récipient (20) autour d'un premier axe (60) en utilisant ladite première paire (33) d'actionneurs (3) lorsque ledit deuxième courant (I2) est appliqué à la première paire correspondante (31) de secondes bobines (302) de sorte qu'une quantité de force ajoutée sur un côté de l'élément de mise en forme de lentille (6) au moyen d'une seconde bobine (302) de la première paire (33) d'actionneurs (3) et de l'aimant (5) interagissant avec cette seconde bobine (302) est éliminée simultanément sur un côté opposé de l'élément de mise en forme de lentille (6) au moyen de l'autre seconde bobine (302) de la première paire (33) d'actionneurs (3) et de l'aimant (5) interagissant avec cette autre seconde bobine (302) de manière à empêcher un décalage de la longueur focale de la lentille (2) dès ladite inclinaison de l'élément de mise en forme de lentille (6) autour dudit premier axe (60) ; et/ou que le dispositif optique (1) est configuré pour incliner l'élément de mise en forme de lentille (6) par rapport au récipient (20) autour d'un second axe (61) en utilisant ladite seconde paire (34) d'actionneurs (3) lorsque ledit troisième courant (I3) est appliqué à la seconde paire correspondante (32) de secondes bobines (302) de sorte qu'une quantité de force ajoutée sur un côté de l'élément de mise en forme de lentille (6) au moyen d'une seconde bobine (302) de la seconde paire (34) d'actionneurs (3) et de l'aimant (5) interagissant avec cette seconde bobine (302) est éliminée simultanément sur un côté opposé de l'élément de mise en forme de lentille (6) au moyen de l'autre seconde bobine (302) de la seconde paire (34) d'actionneurs (3) et de l'aimant (5) interagissant avec cette autre seconde bobine (302) de manière à empêcher un décalage de la longueur focale de la lentille (2) dès ladite inclinaison de l'élément de mise en forme de lentille (6) autour dudit second axe (61).

7. Dispositif optique (1) selon la revendication 1, dans lequel la première et la seconde bobine (301, 302) de l'actionneur respectif (3) comprennent une pluralité d'enroulements (311, 312), dans lequel les enroulements (312) de la seconde bobine (302) de l'actionneur respectif (3) sont enroulés sur les enroulements (311) de la première bobine (301) de l'actionneur respectif (3), ou que les enroulements (311) de la première bobine (301) de l'actionneur respectif (3) sont enroulés sur les enroulements (312) de la seconde bobine (302) de l'actionneur respectif (3).

8. Dispositif optique (1) selon la revendication 1, dans lequel la première et la seconde bobine (301, 302) de l'actionneur respectif (3) comprennent une pluralité d'enroulements (311, 312), dans lequel chaque enroulement (311) de la première bobine (301) de l'actionneur respectif (3) s'étend de manière adjacente à un enroulement (312) de la seconde bobine (302) de l'actionneur respectif (3).

9. Dispositif optique (1) selon la revendication 1, dans lequel la première et la seconde bobine (301, 302) de l'actionneur respectif (3) comprennent une pluralité d'enroulements (311, 312), dans lequel des enroulements (311) de la première bobine (301) de l'actionneur respectif (3) sont empilés l'un au-dessus de l'autre perpendiculairement à un axe de bobine commun (C) de la première bobine (301) et la seconde bobine (302) de l'actionneur respectif (3) tandis que des enroulements (312) de la seconde bobine (302) sont empilés l'un au-dessus de l'autre perpendiculairement audit axe de bobine commun (C).

10. Dispositif optique (1) selon la revendication 1, dans lequel les quatre premières bobines (301) forment un conducteur continu configuré pour interagir simultanément avec l'ensemble desdits aimants (5) desdits actionneurs (3) pour ajuster la longueur focale de la lentille (2), et dans lequel
l'aimant respectif (5) fait face à la première et la seconde bobine (301, 302) de son actionneur (3) dans une direction d'un axe de bobine commun (C) de la première et la seconde bobine (301, 302).

11. Dispositif optique (1) selon la revendication 10, dans lequel l'aimant respectif (5) comprend une structure de renvoi de flux magnétique (500) agencée sur un côté (5b) de l'aimant (5) qui est détourné de la première et la seconde bobine (301, 302).

12. Dispositif optique (1) selon la revendication 10, dans lequel l'aimant respectif (5) comprend une première section (51) comprenant une première aimantation (M1) et une seconde section adjacente (52) comprenant une seconde aimantation (M2), dans lequel la première et la seconde aimantation (M1, M2) sont antiparallèles.

13. Dispositif optique (1) selon la revendication 1, dans lequel les quatre premières bobines (301) forment un conducteur continu configuré pour interagir simultanément avec l'ensemble desdits aimants (5) desdits actionneurs (3) pour ajuster la longueur focale de la lentille (2), et dans lequel l'aimant respectif (5) fait saillie dans un orifice (300) entouré de la première et la seconde bobine (301, 302) de son actionneur (3) dans une direction d'un axe de bobine commun (C) de la première et la seconde bobine (301, 302).

14. Procédé d'assemblage d'un dispositif optique (1), comprenant les étapes consistant à:
- connecter un capteur d'image (8) du dispositif optique (1) à une base (80) du dispositif optique (1),
- monter un barillet de lentille (9) comprenant au moins une lentille rigide (90) sur la base (80) de sorte que le barillet de lentille (9) fait face au capteur d'image (8) et le barillet de lentille (9) est focalisé sur le capteur d'image (8),
- fournir quatre premières et quatre secondes bobines (301, 302) et monter les premières et les secondes bobines sur la base (80), dans lequel lesdites premières et secondes bobines (301, 302) sont constituées d'un substrat (10) qui est monté sur la base (80), et dans lequel le substrat (10) comprend des retraits (300), dans lequel chaque retrait (300) est entouré d'une première et d'une seconde bobine (301, 302) et configuré pour recevoir un aimant (5),
- fournir quatre poussoirs (600) connectés à une structure à ressort (40), dans lequel le poussoir respectif (600) comprend une première et une seconde section d'extrémité (600a, 600b),
- fournir quatre aimants (5) et connecter chaque aimant (5) à une seconde section d'extrémité (600b) d'un poussoir (600),
- connecter une lentille (2) comprenant un récipient (20) et un élément de mise en forme de lentille (6) aux poussoirs (600), dans lequel le récipient (20) comprend une première paroi (22) sous la forme d'une membrane transparente, élastiquement déformable et d'une seconde paroi transparente (23) faisant face à la première paroi (22), dans lequel le récipient (20) est rempli d'un fluide (21) qui est agencé entre les deux parois (22, 23), et dans lequel l'élément de mise en forme de lentille (6) est assemblé à la membrane (22) et comprend des bras (6a) faisant saillie depuis une région circonférentielle (6b) de l'élément de mise en forme de lentille (6), dans lequel lesdits bras (6a) sont connectés aux poussoirs (600) afin de connecter la lentille (2) aux poussoirs (600),
- connecter un écarteur (91) à un côté supérieur (9a) du barillet de lentille (9),
- connecter la structure à ressort (40) à la base (80), dans lequel le récipient (20) est agencé sur l'écarteur (91) de sorte que chaque bras (6a) de l'élément de mise en forme de lentille (6) fait saillie à travers un retrait (91a) de l'écarteur (91) et les aimants (5) sont notamment agencés dans les retraits (300) du substrat (10) tandis que les poussoirs (600) s'étendent le long de l'axe optique (A) de la lentille (2) sur un extérieur du barillet de lentille (9), et
- connecter un logement (12) à la base (80).

15. Dispositif optique selon la revendication 1, dans lequel le dispositif optique est configuré pour incliner l'élément de mise en forme de lentille par rapport au récipient autour d'un second axe en utilisant ladite seconde paire d'actionneurs lorsque ledit troisième courant est appliqué à la seconde paire correspondante de secondes bobines afin d'incliner ladite zone de la membrane par rapport à la seconde paroi du récipient de manière à décaler ladite image dans une seconde direction pour stabiliser ladite image, dans lequel la seconde direction s'étend notamment perpendiculairement à la première direction.
